# EUROPEAN PATENT SPECIFICATION

(11) **EP 3 212 687 B1**
(45) Date of publication and mention of the grant of the patent: **20.02.2019**
(21) Application number: 15790781.7
(22) Date of filing: 27.10.2015
(51) Int. Cl.: C08G 18/42, C08J 11/24, C08G 63/60, C08G 63/66

(54) **HIGH RECYCLE CONTENT POLYESTER POLYOLS FROM HYDROXY-FUNCTIONAL KETAL ACIDS, ESTERS OR AMIDES**
POLYESTERPOLYOLE AUS HYDROXYFUNKTIONELLEN KETALSÄUREN, ESTERN ODER AMIDEN MIT HOHEM RECYCLINGGEHALT
POLYESTERPOLYOLS, À TENEUR ÉLEVÉE EN PRODUITS DE RECYCLAGE, D'ACIDES, D'ESTERS OU D'AMIDES DE CÉTAL À FONCTIONNALITÉ HYDROXY

(30) Priority: 29.10.2014 US 201462072070 P
(43) Date of publication of application: 06.09.2017
(73) Proprietor: Resinate Materials Group, Inc., Plymouth, MI 48170 (US)
(72) Inventor: TABOR, Rick, Plymouth, MI 48170 (US); VRABEL, Eric, David, Ferndale, MI 48220 (US); ROGERS, Kevin, Anthony, Detroit, MI 48208 (US); BEATTY, Matthew, James, Ann Arbor, MI 48103 (US); BAE, Woo-Sung, Midland, MI 48640 (US); KOVSKY, Jack Rogers, Detroit, MI 48202 (US); CHRISTY, Michael Robert, Howell, MI 48843 (US)
(74) Representative: Prinz & Partner mbB
(86) International application number: PCT/US2015/057620
(87) International publication number: WO 2016/069622

(56) References cited:
- EP-A1- 2 325 229
- US-A- 4 559 370
- US-B2- 8 604 077

## Description

### FIELD OF THE INVENTION

The invention relates to polyol compositions produced from hydroxy-functional ketal acids, esters or amides. The polyols are useful for formulating polyurethanes and other condensation polymers.

### BACKGROUND OF THE INVENTION

Aromatic polyester polyols are commonly used intermediates for the manufacture of polyurethane products, including flexible and rigid foams, polyisocyanurate foams, coatings, sealants, adhesives, and elastomers. The aromatic content of these polyols contributes to strength, stiffness, and thermal stability of the urethane product.

Commonly, the aromatic polyester polyol is made by condensing aromatic diacids, diesters, or anhydrides (e.g., terephthalic acid, dimethyl terephthalate) with glycols such as ethylene glycol, propylene glycol, diethylene glycol, or the like. These starting materials usually derive exclusively from petrochemical sources.

As companies increasingly seek to offer products with improved sustainability, the availability of intermediates produced from bio-renewable and/or recycled materials becomes more leveraging. However, there remains a need for these products to deliver equal or better performance than their traditional petroleum-based alternatives at a comparable price point.

Bio-renewable content alone can be misleading as an indicator of "green" chemistry. For example, when a food source such as corn is needed to provide the bio-renewable content, there are clear trade-offs between feeding people and providing them with performance-based chemical products. Additionally, the chemical or biochemical transformations needed to convert sugars or other bio-friendly feeds to useful chemical intermediates such as polyols can consume more natural resources and energy and can release more greenhouse gases and pollutants into the environment than their petro-based alternatives in the effort to achieve "green" status.

Waste thermoplastic polyesters, including waste polyethylene terephthalate (PET) streams (e.g., from plastic beverage containers), provide an abundant source of raw material for making new polymers. Usually, when PET is recycled, it is used to make new PET beverage bottles, PET fiber, or it is chemically transformed to produce polybutylene terephthalate (PBT). Other recycled raw materials are also available. For example, recycled propylene glycol is available from aircraft or RV deicing and other operations, and recycled ethylene glycol is available from spent vehicle coolants.

Urethane formulators demand polyols that meet required specifications for color, clarity, hydroxyl number, functionality, acid number, viscosity, and other properties. These specifications will vary and depend on the type of urethane application. For instance, rigid foams generally require polyols with higher hydroxyl numbers than the polyols used to make flexible foams.

Polyols suitable for use in making high-quality polyurethanes have proven difficult to manufacture from recycled materials, including recycled polyethylene terephthalate (rPET). Many references describe digestion of rPET with glycols (also called "glycolysis"), usually in the presence of a catalyst such as zinc, titanium, or tin. Digestion converts the polymer to a mixture of glycols and low-molecular-weight PET oligomers. Although such mixtures have desirably low viscosities, they often have high hydroxyl numbers or high levels of free glycols. Frequently, the target product is a purified bis(hydroxyalkyl) terephthalate (see, e.g., U.S. Pat. Nos. 6,630,601, 6,642,350, and 7,192,988) or terephthalic acid (see, e.g., U.S. Pat. No. 5,502,247). Some of the efforts to use glycolysis product mixtures for urethane manufacture are described in a review article by D. Paszun and T. Spychaj (Ind. Eng. Chem. Res. 36 (1997) 1373).

Most frequently, ethylene glycol is used as the glycol reactant for glycolysis. This is sensible because it minimizes the possible reaction products. Usually, the glycolysis is performed under conditions effective to generate bis(hydroxyethyl) terephthalate ("BHET"), although sometimes the goal is to recover pure terephthalic acid. When ethylene glycol is used as a reactant, the glycolysis product is typically a crystalline or waxy solid at room temperature. Such materials are less than ideal for use as polyol intermediates because they must be processed at elevated temperatures. Polyols are desirably free-flowing liquids at or close to room temperature. Document EP 2 325 229 A1, paragraph [0001] relates to polyesters that can be prepared from renewable resources and/or recycled materials, to their use and their production process. Example 4 discloses the preparation of a polyester polyol from recycled PET, ethylene glycol and isosorbide.

Hydroxy-functional ketal acids, esters and amides, which can be produced from certain bioavailable oxocarboxylates, have been proposed as building blocks for greener polymers (see, e.g., U.S. Pat. Nos. 8,604,077; 8,546,519; and 8,053,468). For instance, levulinic acid, pyruvic acid, acetoacetic acid, and their ester or amide derivatives, and the like, can be converted to the corresponding ketals by reacting the oxo functionality of the acid, ester or amide with a triol or tetrol such as glycerol or trimethylolpropane. A variety of polymers made from the hydroxy-functional ketal acids, esters and amides are known.

Improved polyols are needed. In particular, the urethane industry needs sustainable polyols based in substantial part on recycled polymers such as the practically unlimited supply of recycled polyethylene terephthalate. Polyols with high recycle content that satisfy the demanding color, clarity, viscosity, functionality, and hydroxyl content requirements of polyurethane formulators would be valuable.

### SUMMARY OF THE INVENTION

The invention relates to polyester polyols, processes for making them, and applications for the polyols.

In one aspect, the polyol comprises recurring units from a digested thermoplastic polyester, a glycol, and a hydroxy-functional ketal acid, ester or amide. The molar ratio of glycol to thermoplastic polyester recurring units is at least 1.5. The molar ratio of ketal acid, ester or amide to thermoplastic polyester recurring units is within the range of 0.5 to 2.0. The polyol has a hydroxyl number within the range of 25 to 800 mg KOH/g.

In some aspects, the polyol further comprises recurring units from a hydrophobe such as a dimer fatty acid, a natural oil or other triglyceride, or a bio-polyol.

In some inventive processes for making the polyester polyols, a thermoplastic polyester is heated with a glycol to give a digested
intermediate. The intermediate is then reacted with a hydroxy-functional ketal acid, ester or amide to give the polyol. The molar ratio of glycol to thermoplastic polyester or aromatic polyacid source is at least 1.5, the molar ratio of hydroxy-functional ketal acid, ester or amide to thermoplastic polyester or aromatic polyacid source recurring units is within the range of 0.5 to 2.0, and the polyol has a hydroxyl number within the range of 25 to 800 mg KOH/g.

In other inventive processes, no digested intermediate is prepared; the thermoplastic polyester, the glycol, and the hydroxy-functional ketal acid, ester or amide are simply combined and reacted in a single process step.

We surprisingly found that high-recycle-content polyester polyols having desirable hydroxyl numbers, viscosities, functionalities, appearance, and other attributes for formulating polyurethane products can be made by reacting a thermoplastic polyester, a glycol, and a hydroxy-functional ketal acid, ester or amide. The ketal acid, ester or amide facilitates production from recycled thermoplastics of polyols that have good transparency and little or no particulate settling or phase separation. The polyols, which are valuable for formulating a variety of polyurethanes and related products--including polyurethane dispersions, flexible and rigid foams, coatings, adhesives, sealants, and elastomers--provide a sustainable alternative to bio- or petrochemical-based polyols.

### DETAILED DESCRIPTION OF THE INVENTION

In one aspect, the polyol comprises recurring units from a digested thermoplastic polyester, a glycol, and a hydroxy-functional ketal ester or amide.

Thermoplastic polyesters suitable for use are well known in the art. They are condensation polymers produced from the reaction of glycols and aromatic dicarboxylic acids or acid derivatives. Examples include polyethylene terephthalate (PET); polybutylene terephthalate (PBT); polytrimethylene terephthalate (PTT); glycol-modified polyethylene terephthalate (PETG); copolymers of terephthalic acid and 1,4-cyclohexanedimethanol (PCT); PCTA (an isophthalic acid-modified PCT); polyhydroxy alkanoates (e.g., polyhydroxybutyrate); copolymers of 2,2,4,4-tetramethyl-1,3-cyclobutanediol with isophthalic acid, terephthalic acid or orthophthalic derivatives; polyethylene furanoate; dihydroferulic acid polymers (e.g., poly(dihydroferulic acid) and poly(dihydroferulic acid-co-ferulic acid); see PCT Internat. Appl. No. WO 2014/075057, and the like, and mixtures thereof. Further examples of polyester thermoplastics are described in Modern Polyesters: Chemistry and Technology of Polyesters and Copolyesters, J. Scheirs and T. Long, eds., Wiley Series in Polymer Science, 2003, John Wiley & Sons, Ltd. Hoboken, NJ. Other examples of thermoplastic polyesters may be found in Chapters 18-20 of Handbook of Thermoplastics, O. Olabisi, ed., 1997, Marcel Dekker, Inc. New York. Suitable thermoplastic polyesters include virgin polyesters, recycled polyesters, or mixtures thereof. In a preferred aspect, polyethylene terephthalate, especially recycled polyethylene terephthalate (rPET), virgin PET, and mixtures thereof, is used. For more examples of suitable thermoplastic polyesters, see U.S. Pat. Appl. Publ. No. 2009/0131625.

Recycled polyethylene terephthalate suitable for use in making the inventive polyester polyols can come from a variety of sources. The most common source is the post-consumer waste stream of PET from plastic bottles or other containers. The rPET can be colorless or contain dyes (e.g., green, blue, or other colors) or be mixtures of these. A minor proportion of organic or inorganic foreign matter (e.g., paper, other plastics, glass, metal, etc.) can be present. A desirable source of rPET is "flake" rPET, from which many of the common impurities present in scrap PET bottles have been removed in advance. Another desirable source of rPET is pelletized rPET, which is made by melting and extruding rPET through metal filtration mesh to further remove particulate impurities. Because PET plastic bottles are currently manufactured in much greater quantity than any recycling efforts can match, scrap PET will continue to be available in abundance.

In some aspects, the polyester polyol comprises recurring units from a digested thermoplastic polyester. "Digested" refers to a reaction product generated by reacting the thermoplastic polyester with one or more glycols, optionally in the presence of a catalyst, under conditions effective to at least partially depolymerize the thermoplastic polyester to produce oligomeric materials.

Glycols suitable for use are well known. By "glycol," we mean a linear or branched, aliphatic or cycloaliphatic compound or mixture of compounds having two or more hydroxyl groups. Other functionalities, particularly ether or ester groups, may be present in the glycol. In preferred glycols, two of the hydroxyl groups are separated by from 2 to 10 carbons, preferably 2 to 5 carbons. Suitable glycols include, for example, ethylene glycol, propylene glycol, 1,3-propanediol, 1,2-butylene glycol, 1,3-butylene glycol, 1,4-butanediol, 2-methyl-1,3-propanediol, pentaerythritol, sorbitol, neopentyl glycol, glycerol, trimethylolpropane, 2,2,4,4-tetramethyl-1,3-cyclobutanediol, 3-methyl-1,5-pentanediol, 1,4-cyclohexane-dimethanol, 1,3-cyclohexanedimethanol, bisphenol A ethoxylates, diethylene glycol, dipropylene glycol, triethylene glycol, 1,6-hexanediol, tripropylene glycol, tetraethylene glycol, polyethylene glycols having a number average molecular weight up to about 400 g/mol, block or random copolymers of ethylene oxide and propylene oxide, and the like, and mixtures thereof. In some aspects, the glycol is selected from propylene glycol, 2-methyl-1,3-propanediol, 3-methyl-1,5-pentanediol, neopentyl glycol, diethylene glycol, polyethylene glycol having a number average
molecular weight of about 200, and mixtures thereof. Propylene glycol is particularly preferred. In a preferred aspect, the glycol is a recycled glycol, especially recycled propylene glycol. Propylene glycol recovered from used deicing fluids is one example.

In some aspects, the polyester polyol comprises recurring units from a hydroxy-functional ketal acid, ester or amide. Suitable hydroxy-functional ketal acids, esters, and amides can be made by reacting oxocarboxylates with a triol, preferably in the presence of an acid catalyst. As used herein, and for convenience, "ketal" refers to either a hydroxy-functional ketal (reaction product of a triol and a ketone) or a hydroxy-functional acetal (reaction product of a triol and an aldehyde).

Suitable oxocarboxylates have a ketone or aldehyde ("oxo") functionality in addition to a carboxylate (acid, ester, or amide) functionality. The carbonyl groups of the ketone or aldehyde may or may not be separated by one or more carbons from the acid, ester, or amide carbonyl.

Suitable oxocarboxylates include keto acids, keto esters, keto amides, aldo acids, aldo esters, and aldo amides.

Suitable keto acids include, for example, pyruvic acid, acetoacetic acid, levulinic acid, oxaloacetic acid, 2-ketobutyric acid, 2-ketovaleric acid, homolevulinic acid, 4-acetylbutyric acid, 3-ketohexanoic acid, 5-acetylvaleric acid, and the like.

Suitable keto esters are lower (e.g., C₁-C₁₀, preferably C₁-C₆) alkyl or alkenyl esters of the keto acids. Suitable alcohols used for making the esters from the keto acids include, for example, methanol, ethanol, 1-propanol, 2-propanol, 1-butanol, 2-butanol, 1-hexanol, and the like, with methyl esters and ethyl esters being most preferred. Thus, suitable keto esters include, for example, ethyl pyruvate, ethyl acetoacetate, methyl acetoacetate, ethyl levulinate, ethyl 4-acetylbutyrate, and the like.

Suitable keto amides are reaction products of keto acids with ammonia, primary amines, or secondary amines, preferably secondary amines. Suitable amines for making the amides from the keto acids include, for example, methylamine, ethylamine, n-butylamine, cyclohexylamine, dimethylamine, diethylamine, di-n-butylamine, pyrrolidine, piperidine, and the like.

Suitable aldo acids include, for example, 2-oxoacetic acid, 3-oxopropanoic acid, 2-methyl-3-oxopropanoic acid, 4-oxobutanoic acid, 2-methyl-4-oxobutanoic acid, 3-methyl-4-oxobutanoic acid, 5-oxopentanoic acid, 2-methyl-5-oxopentanoic acid, 3-methyl-5-oxopentanoic acid, 4-methyl-5-oxopentanoic acid, 6-oxohexanoic acid, 5-methyl-6-oxohexanoic acid, and the like.

Suitable aldo esters are lower (e.g., C₁-C₁₀, preferably C₁-C₆) alkyl or alkenyl esters of the aldo acids. Suitable alcohols used for making the esters from the aldo acids include, for example, methanol, ethanol, 1-propanol, 2-propanol, 1-butanol, 2-butanol, 1-hexanol, and the like, with methyl esters and ethyl esters being most preferred. Thus, suitable aldo esters include, for example, ethyl 3-oxopropanoate, methyl 4-oxobutanoate, ethyl 6-oxohexanoate, and the like.

Suitable aldo amides are reaction products of aldo acids with ammonia, primary amines, or secondary amines. Suitable amines for making the amides from the aldo acids include, for example, methylamine, ethylamine, n-butylamine, cyclohexylamine, dimethylamine, diethylamine, di-n-butylamine, pyrrolidine, piperidine, and the like.

For additional examples of suitable oxocarboxylates, see U.S. Pat. Nos. 8,604,077; 8,546,519; and 8,053,468.

The hydroxy-functional ketal acids, esters, and amides can be made by reacting oxocarboxylates with a triol. Suitable triols have are relatively low molecular weight compounds having three hydroxyl groups. Examples include glycerol, trimethylolpropane, trimethylolethane, 1,2,4-butanetriol, 1,2,5-trihydroxypentane, and the like. Glycerol, trimethylolpropane, and trimethylolethane are readily available and are preferred for some aspects. For additional examples of suitable triols, see U.S. Pat. Nos. 8,604,077; 8,546,519; and 8,053,468.

The reaction of an oxycarboxylate and a triol, in some aspects in the presence of an acid catalyst, provides a hydroxy-functional ketal acid, ester, or amide. Suitable acid catalysts for this reaction are well known and include mineral acids, organic acids, solid acids, organic clays, and the like. Organic sulfonic acids, such as p-toluenesulfonic acid, are particularly preferred.

In some aspects, the hydroxy-functional ketal acid, ester, or amide has the general structure: 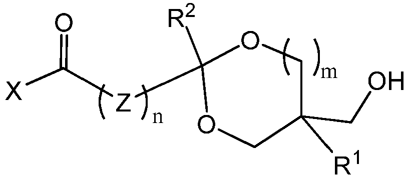 wherein R¹ is hydrogen, methyl, ethyl, or hydroxymethyl; R² is hydrogen, C₁-C₂₄ alkyl, or C₁-C₂₄ alkenyl; Z is a C₁-C₆ alkylene group or a C₁-C₆ alkylene group substituted with a C₁-C₂₄ alkyl or alkenyl group; X is OR³ or NR⁴R⁵; R³ is hydrogen or a C₁-C₁₂ alkyl group; each of R⁴ and R⁵ is independently a C₁-C₁₂ alkyl group; m is 0 or 1; and n is 0 or 1. In some aspects, X is preferably OR³, and R³ is a C₁-C₁₂ alkyl group.

Hydroxy-functional ketal esters are preferred. Suitable hydroxy-functional ketal esters include, for example, ethyl levulinate glycerol ketal, methyl levulinate trimethylolpropane ketal, ethyl levulinate trimethylolpropane ketal, ethyl pyruvate glycerol ketal, ethyl pyruvate triethylolpropane ketal, ethyl acetoacetate glycerol ketal, and the like. In some aspects, levulinate glycerol ketals are preferred hydroxy-functional ketal esters.

In some aspects, the molar ratio of ketal acid, ester or amide recurring units to thermoplastic polyester recurring units is within the range of 0.5 to 2.0, or 0.6 to 1.8, or 0.7 to 1.6.

### Optional Hydrophobes

In some aspects, the polyester polyol may incorporate recurring units from one or more hydrophobes. When a hydrophobe is included, it is preferably included in an amount within the range of 0.1 to 1.0 moles of hydrophobe per mole of thermoplastic polyester. In other aspects, the hydrophobe is present in an amount within the range of 0.15 to 0.8 moles of hydrophobe per mole of thermoplastic polyester.

Suitable hydrophobes are well known. Examples include dimer fatty acids, oleic acid, ricinoleic acid, tung oil, corn oil, canola oil, soybean oil, sunflower oil, triglycerides or alkyl carboxylate esters having saturated or unsaturated C₆-C₃₆ fatty acid units, castor oil, alkoxylated castor oil, saturated or unsaturated C₆-C₁₈ dicarboxylic acids or diols, cardanol-based products, recycled cooking oil, branched or linear C₆-C₃₆ fatty alcohols, hydroxy-functional materials derived from epoxidized, ozonized, or hydroformylated fatty esters or fatty acids, and mixtures thereof. The hydrophobes are well-suited to be reacted with glycol-digested thermoplastic polyesters and hydroxy-functional ketal esters or amides. The resulting products can be non-viscous, pourable liquids that usually have good transparency, low particulates, and little or no tendency to phase separate.

Dimer fatty acids are suitable hydrophobes. Dimer fatty acids are made by dimerizing unsaturated fatty acids (e.g., oleic acid, linoleic acid, linolenic acid, ricinoleic acid) in the presence of a catalyst, such as a bentonite or montmorillonite clay. Commercially available dimer fatty acids are usually mixtures of products in which the dimerized product predominates. Some commercial dimer acids are made by dimerizing tall oil fatty acids. Dimer fatty acids frequently have 36 carbons and two carboxylic acid groups. They may be saturated or unsaturated. They may also be hydrogenated to remove unsaturation. In a preferred aspect, the dimer fatty acid comprises dimerized oleic acid, trimerized oleic acid, dimerized linoleic acid, trimerized linolelic acid, dimerized linolenic acid, trimerized linolenic acid, or mixtures thereof. Suitable dimer fatty acids include Pripol™ dimer fatty acids (products of Croda) such as Pripol™ 1006, 1009, 1010, 1012, 1013, 1017, 1022, 1025, 1027, 1029, 1036, and 1098; Unidyme™ dimer acids (products of Arizona Chemical) such as Unidyme 10, 14, 18, 22, 35, M15, and M35; dimer acids available from Emery Oleochemicals, and FloraDyme™ dimer acids from Florachem Corporation. Methods for synthesizing dimer fatty acids suitable for use are also known. Fatty acids having at least one carbon-carbon double bond are dimerized in the presence of a catalyst such as a montmorillonite, kaolinite, hectorite, or attapulgite clay (see, e.g., U.S. Pat. Nos. 2,793,220, 4,371,469, 5,138,027, and 6,281,373, see also WO 2000/075252 and CA 104511).

Oleic acid is a suitable hydrophobe. Oleic acid is ubiquitous in nature as a fatty acid and is readily available from saponification of animal and vegetable fats and oils.

Ricinoleic acid (12-hydroxy-9-*cis*-octadecenoic acid) can be used as the hydrophobe. Castor oil contains 90% or more of ricinoleic acid residues, and is a convenient and primary source of the acid.

Tung oil, also called "China wood oil," is also suitable for use as the hydrophobe. Tung oil is a triglyceride. The principal fatty acid residues (about 82%) are from alpha-eleostearic acid, a C₁₈ fatty acid with 9-*cis*, 11-*trans*, 13-*trans* unsaturation. The other fatty acid residues are from linoleic acid (8.5%), palmitic acid (5.5%), and oleic acid (4%). Consequently, tung oil has ester (glyceride) and olefin functionalities, and compared with other oils, it is highly unsaturated.

Other natural oils such as corn oil, canola oil, soybean oil, sunflower oil, and the like, are suitable hydrophobes. Also suitable are triglycerides or alkyl carboxylate esters having saturated or unsaturated C₆-C₃₆ fatty acid units.

Castor oil and alkoxylated castor oils are also suitable as hydrophobes. Castor oils ethoxylated with various proportions of ethylene oxide, for instance 5 to 100 moles of EO per mole of castor oil, are commercially available. Ethoxylated castor oils have ester (glyceride), olefin, and primary hydroxyl functionalities. Examples include Toximul® 8241, Toximul® 8242, and Toximul® 8244, products of Stepan Company, and the Etocas™ series of ethoxylated castor oils from Croda. Ethoxylated castor oils can also be synthesized using well-known processes by reacting the oil with ethylene oxide in the presence of an alkoxide, Lewis acid, double metal cyanide complex, or other suitable ethoxylation catalyst.

Saturated or unsaturated C₆-C₁₈ dicarboxylic acids or diols are suitable for use as hydrophobes. Examples include azelaic acid, nonenedioic acid, sebacic acid, decenedioic acid, dodecanedioic acid, dodecenedioic acid, tetradecanedioic acid, tetradecenedioic acid, hexadecanedioic acid, hexadecenedioic acid, octadecanedioic acid, octadecenedioic acid, and the like, and mixtures thereof. Dicarboxylic acids are generally widely available from commercial sources.

Cardanol-based products can also be used as the hydrophobe. Cardanol, the main constituent of cashew nutshell oil, is an alkylated phenol having a linear C₁₅ unsaturated alkyl chain. By "cardanol-based products," we mean to include cardanol and products derived from cardanol. Such products may include alkoxylated cardanols, including the hydroxyalkylated compositions described in U.S. Pat. No. 6,229,054. Also suitable are "cardanol dimers," which can be made by joining two cardanol groups using a siloxane linker. In some aspects, Mannich chemistry is used to introduce amine functionality as an attachment to the phenolic rings of the cardanol dimers. Other functionalities, such as epoxy groups, can be introduced if desired. Suitable cardanol-based products, including cardanol dimers, are disclosed in U.S. Pat. Nos. 7,858,725; 7,994,268; 8,263,726; U.S. Pat. Appl. Publ. Nos. 2011/0118495; 2011/0065947; 2011/0065883; 2011/0065882; and 2011/0065832.

Recycled cooking oils are also suitable hydrophobes. The cooking oils, which contain vegetable oil mixtures, are collected from restaurants or commercial food preparation facilities. We surprisingly found that such cooking oils can be used successfully as the hydrophobe component for making polyester polyols having acceptable properties and very high recycle contents. The product may be dark, even after carbon treatment, but its properties are generally consistent with requirements for acceptable polyols.

Branched or linear C₆-C₃₆ fatty alcohols are suitable hydrophobes. For instance, isostearyl alcohol, a commonly used fatty alcohol available as an article of commerce, is suitable for use. When isostearyl alcohol is used as the hydrophobe, it may be desirable to use a polyol having a hydroxyl functionality greater than 2, e.g., glycerin, to boost the overall average hydroxyl functionality to be within the range of 1.8 to 2.7.

Hydroxy-functional materials derived from epoxidized, ozonized, or hydroformylated fatty esters or fatty acids, also commonly known as "bio-polyols" or "natural oil polyols" are another category of suitable hydrophobes. These products can be made from fatty esters (including natural oils) or fatty acids in several steps. Some products include a step to epoxidize carbon-carbon double bonds in the fatty ester or fatty acid, followed by a ring-opening step. In other products, unsaturation in the fatty ester or fatty acid is hydroformylated and then hydrogenated to introduce the hydroxyl functionality (see, e.g., D. Babb et al., Polym. Preprints 48 (2007) 855, PCT Internat. Appl. WO 2006/012344, and U.S. Pat. No. 8,598,297. Polyols made by hydrolysis or alcoholysis of epoxidized soybean oil are among the suitable bio-polyols. BiOH® polyols supplied by Cargill (e.g., BiOH® X-0002) and Agrol® polyols from BioBased Technologies are also suitable. The bio-polyol can also be generated "in situ" from a reaction between the glycol and an epoxidized fatty ester or an epoxidized fatty acid (such as epoxidized soybean oil, epoxidized methyl oleate, epoxidized oleic acid, or epoxidized methyl soyate). Suitable bio-polyols include polyols derived from ozonized fatty esters or ozonized fatty acids, such as mixtures obtained by ozonolysis of a natural oil in the presence of a glycol, as is described by P. Tran et al., J. Am. Oil Chem. Soc. 82 (2005) 653. For more examples of suitable bio-polyols, see U.S. Pat. Nos. 6,433,121; 8,664,352, U.S. Publ. Nos. 2012/0136169, 2011/0313124, and 2009/0287007, and PCT Appl. No. WO2009/058367.

### Processes for Polyester Polyols and Polyol Attributes

The invention includes processes for making the polyester polyols. In one aspect, the process comprises a first step of heating a thermoplastic polyester or an aromatic polyacid source with a glycol to give a digested intermediate. The intermediate is then reacted with a hydroxy-functional ketal acid, ester or amide to give the polyol. In this aspect, the molar ratio of glycol to thermoplastic polyester recurring units is at least 1.5, the molar ratio of ketal acid, ester or amide to thermoplastic polyester recurring units is within the range of 0.5 to 2.0, and the polyol has a hydroxyl number within the range of 25 to 800 mg KOH/g.

When a thermoplastic polyester is used, the digested intermediate can be a mixture of glycol reactant, glycol(s) generated from the thermoplastic polyester, terephthalate oligomers, and other glycolysis products. For example, when PET or rPET is the thermoplastic polyester, the digested intermediate can include a mixture of glycol reactant, ethylene glycol (generated from the PET or rPET), bis(2-hydroxyalkyl) terephthalate ("BHAT"), higher PET oligomers, and other glycolysis products. Similar digested mixtures in various forms have been made and characterized previously (see, e.g., D. Paszun et al., Ind. Eng. Chem. Res. 36 (1997) 1373 and N. Ikladious, J. Elast. Plast. 32 (2000) 140). Heating is advantageously performed at temperatures within the range of 80°C to 260°C, preferably 100°C to 250°C, more preferably 130°C to 240°C, and most preferably 160°C to 230°C.

In one aspect, when the thermoplastic polyester is polyethylene terephthalate, the digested intermediate comprises glycols and a terephthalate component. The terephthalate component preferably comprises, by gel permeation chromatography using ultraviolet detection, 45 to 70 wt.% of bis(hydroxyalkyl)terephthalates. In a preferred aspect, the terephthalate component further comprises 20 to 40 wt.% of terephthalate dimers. In another preferred aspect, the terephthalate component of the digested intermediate comprises 45 to 65 wt.% of bis(hydroxyalkyl)terephthalates, 20 to 35 wt.% of terephthalate dimers, and 5 to 15 wt.% of terephthalate trimers. In another preferred aspect, the terephthalate component comprises 50 to 60 wt.% of bis(hydroxyalkyl)terephthalates, 25 to 30 wt.% of terephthalate dimers, and 8 to 12 wt.% of terephthalate trimers.

Catalysts suitable for making the digested intermediate are well known (see, e.g., K. Troev et al., J. Appl. Polym. Sci. 90 (2003) 1148). In particular, suitable catalysts comprise titanium, zinc, antimony, germanium, zirconium, manganese, tin, or other metals. Specific examples include titanium alkoxides (e.g., tetrabutyl titanate or tetraisopropyl titanate), titanium(IV) phosphate, zirconium alkoxides, zinc acetate, lead acetate, cobalt acetate, manganese(II) acetate, antimony trioxide, germanium oxide, butyl stannoic acid, di-n-butyl-oxo-stannane, di-n-butyltin dilaurate, or the like, and mixtures thereof. Catalysts that do not significantly promote isocyanate reaction chemistries are preferred. As is discussed in more detail below, catalysts comprising titanium, particularly titanium alkoxides, are especially preferred. The amount of catalyst used is typically in the range of 0.005 to 5 wt.%, preferably 0.01 to 1 wt.%, more preferably 0.02 to 0.7 wt.%, based on the total amount of polyol being prepared.

Usually, the digestion reaction is performed by heating the thermoplastic polyester or aromatic polyacid source, the glycol(s), and any catalyst at least until the mixture liquefies and particles of the thermoplastic polyester or aromatic polyacid source are no longer apparent. Reaction times range from about 30 minutes to about 16 hours, more typically 1 to 10 hours, even more typically 3 to 8 hours, and will depend on the reaction temperature, source and nature of the thermoplastic polyester or aromatic polyester source, the particular glycol reactant used, mixing rate, desired degree of depolymerization, and other factors that are within the skilled person's discretion.

The molar ratio of glycol to thermoplastic polyester or aromatic polyester source is at least 1.5, preferably 1.5 to 6.0, more preferably 1.5 to 4.5. When the glycol to thermoplastic polyester (or aromatic polyester source) molar ratio is below 1.5, the polyester polyol may be a solid or may be too viscous to be practical for use as a polyol. On the other hand, when the glycol/thermoplastic polyester (or aromatic polyester source) molar ratio is greater than about 6, the hydroxyl number of the polyester polyol may tend to exceed the practical upper limit of about 800 mg KOH/g.

When a digested intermediate is prepared, it is reacted in a second step with a hydroxy-functional ketal acid, ester or amide (and any optional hydrophobe) to give the polyester polyol. The reaction between the digested intermediate and the hydroxy-functional ketal ester or amide is performed under conditions effective to promote a condensation reaction between the digested intermediate and the hydroxy-functional ketal acid, ester or amide.

Reactions between the digested intermediate and hydroxy-functional ketal acid, ester or amide (and any optional hydrophobe) are preferably performed by heating at temperatures within the range of 80°C to 260°C, preferably 90°C to 230°C, more preferably 100°C to 220°C, and most preferably 110°C to 210°C. Any water, alcohol, amine generated in this reaction is advantageously removed from the reaction mixture as it forms. On a lab scale, it is convenient to use a Dean-Stark trap or similar apparatus to remove such volatile materials, but other means will be more practical on a larger scale. Continuous processes for volatiles removal, such as vacuum stripping, wiped-film evaporation, sparging with dry air or nitrogen, and the like, may be desirable. The reaction may continue until a pre-determined amount of water and/or other volatile by-products have been collected or a target acid number and/or hydroxyl number is reached for the product.

In some aspects, the amount of hydroxy-functional ketal acid, ester or amide incorporated into the polyester polyol is within the range of 5 to 60 wt.%, 10 to 50 wt.%, or 20 to 40 wt.%. When less than 5 wt.% of hydroxy-functional ketal acid, ester or amide is used, there may be too little benefit from including it. When more than 60 wt.% of the hydroxy-functional ketal acid, ester or amide is used, formulation cost may be higher than desirable, and there may be little or no additional performance benefit.

The polyol may incorporate one or more anhydrides, diesters, or dicarboxylic acids outside the C9-C18 range. Suitable dicarboxylic acids include, for example, glutaric acid, adipic acid, succinic acid, cyclohexane dicarboxylic acids, maleic acid, fumaric acid, itaconic acid, phthalic acid, 1,5-furandicarboxylic acid, dimer or trimer fatty acids, isophthalic acid, and anhydrides thereof (e.g., maleic anhydride, phthalic anhydride, itaconic anhydride, and the like). Mixtures of dicarboxylic acids can be used, including, e.g., the commercially available mixture of dibasic acids known as "DBA." A typical DBA composition might contain 51-61 wt.% glutaric acid, 18-28 wt.% succinic acid, and 15-25 wt.% adipic acid.

In another aspect, the polyester polyol is made in a single step by reacting the thermoplastic polyester, the glycol, and the hydroxy-functional acid, ester or amide (and any optional hydrophobe) under conditions effective to produce the polyol. As with polyols made using the two-step process, the molar ratio of glycol to thermoplastic polyester is at least 1.5, the molar ratio of ketal acid, ester or amide to thermoplastic polyester (or aromatic polyacid source) recurring units is within the range of 0.5 to 2.0, and the resulting polyol has a hydroxyl number within the range of 25 to 800 mg KOH/g. When the single-step process is used, it may be preferred to utilize a condensation system that returns glycols to the reaction vessel while allowing removal of water, alcohols, or other volatile by-products, as removal of too much glycol may produce cloudy or opaque polyols.

The inventive polyester polyols have hydroxyl numbers within the range of 25 to 800 mg KOH/g, preferably 35 to 500 mg KOH/g, and more preferably 40 to 400 mg KOH/g. Hydroxyl number can be measured by any accepted method for such a determination, including, e.g., ASTM E-222 ("Standard Test Methods for Hydroxyl Groups Using Acetic Anhydride Acetylation").

In some aspects, the inventive polyols may have average hydroxyl functionalities (i.e., the average number of -OH groups per molecule) within the range of 1.8 to 2.7, preferably 2.0 to 2.5.

In preferred aspects, the inventive polyols are flowable liquids under ambient conditions. Preferably, the polyols have viscosities measured at 25°C less than 30,000 cP, more preferably less than 20,000 cP, most preferably less than 10,000 cP. A preferred range for the polyol viscosity is 300 to 5,000 cP at 25°C, more preferably 500 to 3,000 cP. Viscosity can be determined by any industry-accepted method. It is convenient to use, for instance, a Brookfield viscometer (such as a Brookfield DV-III Ultra rheometer) fitted with an appropriate spindle, and to measure a sample at several different torque settings to ensure an adequate confidence level in the measurements.

The polyols preferably have low acid numbers. Urethane manufacturers will often require that a polyol have an acid number below a particular specification. Low acid numbers can be ensured by driving reactions by removal of water from the reaction mixture to the desired level of completion. Preferably, the polyols have an acid number less than 30 mg KOH/g, more preferably less than 10 mg KOH/g, and most preferably less than 5 mg KOH/g. Acid numbers can be adjusted if necessary for a particular application with an acid scavenger such as, for example, an epoxide derivative, and this treatment can be performed by the manufacturer, distributor, or end user.

An advantage of the polyester polyols is their reduced reliance on petrochemical sources for raw material. Preferably, the polyols include greater than 10 wt.%, more preferably greater than 25 wt.%, most preferably greater than 40 wt.% of recycle content. A preferred range for the recycle content is 25 to 100 wt.%. By "recycle content," we mean the combined amounts of post-consumer and post-industrial recycled materials as a percentage of all of the reactants used. Recycled thermoplastic polyester (e.g., rPET) and recycled glycols are included in this amount. Propylene glycol, ethylene glycol, and diethylene glycol are available as recovered or recycled materials. For instance, propylene glycol is used in deicing fluids, and after use, it can be recovered, purified, and reused. Certain hydrophobes, such as recycled cooking oil, may also be a source of the recycle content.

In some aspects, the polyols will also have bio-renewable content as a result of the presence of bio-renewable hydroxy-functional ketal acids, esters, or amides, such as, for example, levulinate glycerol ketal. By "bio-renewable content," we mean the proportion of readily renewable materials from biological sources compared with th total mass of the reactants. Bio-renewable materials include, for example, plant-derived natural oils and the fatty acid components of the oils. Most of the optional hydrophobes described herein are "bio-renewable." In some aspects, the polyester polyols will have bio-renewable contents greater than 10 wt.%, preferably greater than 25 wt.%, more preferably greater than 40 wt.%.

In some aspects, the polyols will have substantial "green content." By "green content," we mean the sum of the recycle and bio-renewable contents. In some aspects, the polyester polyols will have green contents greater than 20 wt.%, preferably greater than 50 wt.%, more preferably greater than 80 wt.%, and most preferably greater than 90 wt.%.

Although performance in the ultimate end use is paramount, urethane manufacturers like to purchase polyols that have an appearance of quality. When other considerations are equal, a transparent (or nearly transparent) polyol may appear to be of higher quality and easier to process than an opaque one. ("Dispersion polyols" or "polymer polyols," which are common components of the load-bearing, high-resiliency urethane foams used in automotive seating or furniture applications, are a notable exception; they are supposed to appear opaque.) Unlike known polyols that are made by reacting thermoplastic polyester digestion products with dicarboxylic acids such as succinic acid or phthalic anhydride, which are often opaque, the inventive polyols are frequently transparent or nearly so.

Yet another desirable polyol attribute is the absence of settling, particularly upon prolonged storage. When settling is substantial, the polyol might have to be filtered or otherwise treated to remove the solids content; this is preferably avoided. Preferred inventive polyols exhibit no settling or only a slight degree of settling, and more preferred polyols exhibit no evidence of settling.

### Products from the Polyester Polyols

The inventive polyester polyols can be used to formulate a wide variety of polyurethane products. By adjusting the proportion of hydroxy-functional ketal acid, ester or amide and any optional hydrophobe, a desired degree of polyol hydrophobicity can be "dialed in." The ability to control hydrophobicity is particularly valuable in the coatings industry. The polyols can be used alone or in combination with other polyols to produce cellular, microcellular, and non-cellular materials including flexible foams, rigid foams (including polyisocyanurate foams), polyurethane dispersions, coatings (including one- or two-component polyurethanes), adhesives, sealants, and elastomers. The resulting polyurethanes are potentially useful for automotive and transportation applications, building and construction products, marine products, packaging foam, flexible slabstock foam, carpet backing, appliance insulation, cast elastomers and moldings, footwear, biomedical devices, and other applications.

### Curable coatings

Further, the inventive polyester polyols may be derivatized to form mono-, di- and polyacrylates via esterification or transesterification with acrylic acid or methacrylic acid-derived raw materials. Thus, in one aspect, the invention relates to a curable resin comprising a reaction product of an acrylate or methacrylate source and an inventive polyol. Examples of (meth)acrylation raw materials suitable for forming (meth)acrylate derivatives of the inventive polyester polyols include acryloyl chloride, methacryloyl chloride, methacrylic acid, acrylic acid, methyl acrylate, methyl methacrylate, and the like, or mixtures thereof. Such (meth)acrylate-derivatized inventive polyester polyols are useful for radiation or UV-cure coating formulations or applications. Prepolymers of the inventive polyester polyols may be derivatized to form urethane (meth)acrylates via reaction with hydroxyethyl (meth)acrylate. The resulting urethane acrylates may also be used in radiation or UV-cure coating formulations or applications.

### Polyurethane dispersions

In a particular aspect, the invention relates to aqueous polyurethane dispersions made from the inventive polyester polyols. The polyols are readily formulated into aqueous polyurethane dispersions having a desirable balance of properties, including high solids, low viscosities, and a low tendency to settle. Numerous ways to formulate aqueous polyurethane dispersions are known and suitable for use. Preferably, the polyurethane dispersion is made by emulsifying an isocyanate-terminated prepolymer in water with the aid of an emulsifiying agent. Water, a water-soluble polyamine chain extender, or a combination thereof may be used to react with the emulsified prepolymer. The prepolymer is preferably made by reacting an inventive polyester polyol, a hydroxy-functional emulsifier, one or more auxiliary polyols, and one or more polyisocyanates. The aqueous polyurethane dispersions are preferably used to formulate water-borne coatings, adhesives, sealants, elastomers, and similar urethane products, and they are particularly valuable for reducing reliance on solvents. For instance, the dispersions can be used to formulate low- or zero-VOC compositions.

Polyisocyanates suitable for use in making the prepolymers are well known; they include aromatic, aliphatic, and cycloaliphatic polyisocyanates. Examples include toluene diisocyanates (TDIs), MDIs, polymeric MDIs, naphthalene diisocyanates (NDIs), hydrogenated MDIs, trimethyl- or tetramethylhexamethylene diisocyanates (TMDls), hexamethylene diisocyanate (HDI), isophorone diisocyanates (IPDIs), cyclohexane diisocyanates (CHDIs), xylylene diisocyanates (XDI), hydrogenated XDIs, and the like. Aliphatic diisocyanates, such as hexamethylene diisocyanate and isophorone diisocyanates are particularly preferred.

Auxiliary polyols suitable for use are also well known. They include polyether polyols, aliphatic polyester polyols, aromatic polyester polyols, polycarbonate polyols, glycols, and the like. Preferred auxiliary polyols have average hydroxyl functionalities within the range of 2 to 6, preferably 2 to 3, and number average molecular weights within the range of 500 to 10,000, preferably 1,000 to 8,000. Preferred polyester polyols are condensation products of dicarboxylic acids and diols or triols (e.g., ethylene glycol, propylene glycol, 2-methyl-1,3-propanediol, 3-methyl-1,5-pentanediol, 1,4-butanediol, neopentyl glycol, glycerin, trimethylolpropane, 1,4-cyclohexanedimethanol, bisphenol A ethoxylates), especially diols. The dicarboxylic acids can be aliphatic (e.g., glutaric, adipic, succinic) or aromatic (e.g., phthalic), preferably aliphatic.

A hydroxy-functional emulsifier is also used to make the polyurethane dispersions. The role of this component is to impart water-dispersibility to the prepolymer, usually upon its combination with water and a neutralizing agent, such as an acid or base reactant. Thus, in one aspect, the hydroxy-functional emulsifier is an acid-functional diol such as dimethylolpropionic acid (DMPA) or dimethylolbutanoic acid (DMBA). The acid functionality in the resulting prepolymer allows for neutralization with an amine or other basic reactant to generate a water-dispersible urethane. The hydroxy-functional emulsifier can also be an amine, such as N-methyldiethanolamine. Neutralization of the resulting prepolymer with an acidic reagent renders it water dispersible. In other aspects, the hydroxy-functional emulsifier is nonionic, e.g., a polyethylene glycol monomethyl ether. In another aspect, the hydroxy-functional emulsifier may be a monol- or diol-functionalized poly(ethylene oxide), such as for example Ymer™ N120 dispersing monomer (product of Perstorp). Additionally, nonreactive, so-called "external emulsifiers," such as the triethanolamine salt of dodecylbenzene sulfonic acid, may be included in the aqueous phase to assist in the emulsification and stabilization of the prepolymer and resulting polyurethane dispersion.

In certain aspects, a chain terminator may be used to control the molecular weight of polyurethane polymer contained within the aqueous polyurethane dispersion. Monofunctional compounds, such as those containing hydroxyl, amino, and thio groups that have a single active hydrogen-containing group, are suitable chain terminators. Examples include alcohols, amines, thiols, and the like, especially primary and secondary aliphatic amines.

Chain extenders can also be included in making the polyurethane dispersion. In some aspects, the chain extender is added in an amount sufficient to react 5 to 105 mole % of free NCO groups present. Suitable chain extenders contain at least two functional groups that are capable of reacting with isocyanates, e.g., hydroxyl, thio, or amino groups in any combination. Suitable chain extenders include, for example, diols (ethylene glycol, propylene glycol, diethylene glycol, neopentyl glycol, 1,4-butanediol, 2-methyl-1,3-propanediol, 3-methyl-1,5-pentanediol, 1,4-cyclohexanedimethanol, and the like), di- and polyamines (ethylenediamine, diethylenetriamine, Jeffamine® T-403, Jeffamine® D-230, Jeffamine® ED-2001, Jeffamine® ED-600, Jeffamine® ED-900, 1,6-hexamethylenediamine, butylenediamine, hydrazine, piperazine, N-hydroxyethyl ethylenediamine) alkanolamines (ethanolamine, diethanolamine, N-methyl diethanolamine, and the like), dithiols, and the like. Diol chain extenders are preferably added during the preparation of the prepolymer, and prior to emulsification in water, while amine chain extenders are preferably added after emulsification in water.

In a typical example, the polyester polyol, an acid-functional diol (DMPA), and auxiliary polyols (polyethylene glycol 200 and a polyester polyol made from 3-methyl-1,5-pentanediol and adipic acid) are combined and reacted with a mixture of aliphatic diisocyanates (hexamethylene diisocyanate and isophorone diisocyanate) in the presence of a tin catalyst (dibutyltin dilaurate) or a bismuth catalyst (such as bismuth dioctanoate) and a solvent (acetone). The resulting prepolymer is then dispersed in a mixture of water, triethanolamine (neutralizing agent), and a silicone defoamer. The expected product is an aqueous polyurethane dispersion having high solids content, low viscosity, and desirable settling properties.

For more examples of suitable approaches for preparing aqueous polyurethane dispersions, see U.S. Pat. Nos. 5,155,163; 5,608,000; 5,763,526; 6,339,125; 6,635,723, 7,045,573; and 7,342,068.

### Polyurethane adhesives

In another aspect, the invention relates to a solvent-free polyurethane adhesive. The adhesive is formulated using a polyisocyanate and an inventive polyester polyol comprising recurring units from a digested thermoplastic polyester, a glycol, and a hydroxy-functional ketal acid, ester or amide. The adhesive may include other components, such as other polyols, chain extenders, reactive diluents, fillers, pigments, glass particles or spheres, or other components. Preferred polyisocyanates are diisocyanate trimers, particularly hexamethylene diisocyanate trimer, 4,4'-methylene diphenylene diisocyanate trimer, isophorone diisocyanate trimer, and the like, and mixtures thereof. Suitable solvent-free adhesives are formulated by combining the inventive polyester polyol with a diisocyanate trimer and any additives with a suitable catalyst, e.g., di-n-butyltin dilaurate, applying the mixture to a substrate, joining the parts to be attached, and allowing the bond to cure. In some aspects, the NCO/OH ratio will range from 0.95 to 1.5, 1.0 to 1.3, or 1.05 to 1.15. Typical formulations may require 1 to 7 days, or 1 to 3 days, to completely cure at room temperature and 50% relative humidity. Examples of suitable formulations and procedures are shown below.

### Preparation of LGK-Modified rPET Polyols: General Procedure

A reactor equipped with an overhead mixer, condenser, heating mantle, thermocouple, and nitrogen inlet is charged with titanium(IV) butoxide (500-1000 ppm), recycled polyethylene terephthalate pellets, and one or more glycols (see Table 1 for amounts). In some examples, polyethylene glycol 200 (PEG-200), diethylene glycol, or polypropylene carbonate (product of Novomer) are used in addition to or instead of propylene glycol. The mixture is heated and stirred until the reactor contents reach 180°C. The mixture is heated until no particles of recycled PET remain (about 4 h). When the digestion reaction is considered complete, the mixture is cooled to about 100°C. Ethyl levulinate glycerol ketal ("LGK") is then added (see Table 1 for amount used). In some examples, a hydrophobe such as ricinoleic acid or oleic acid is also added. In other examples, phthalic anhydride is included. The mixing rate is increased to 200 rpm. In some examples, a Dean-Stark trap is introduced between the reactor and condenser, and heating to 200°C is resumed. Any water generated in the condensation reaction is removed. When the reaction is considered complete, the polyol product is allowed to cool to 100°C and is then decanted from the reactor and filtered through cheesecloth.

In Example 6, dimethyl terephthalate (DMT) is used as the source of aromatic polyacid instead of recycled polyethylene terephthalate. Thus, the reactor is initially charged with diethylene glycol (DEG, 85 g), ethyl levulinate glycerol ketal (80 g), and titanium catalyst. After an initial heating period, DMT (43 g) is added, and the reaction continues. The polyol product is isolated in the manner described above.

"Recycle content" is the proportion of post-consumer and post-industrial recycled materials compared with the mass of all reactants. Materials having recycle content in the examples: rPET, propylene glycol, diethylene glycol, polypropylene carbonate diol from Novomer (the portion of the PO/CO₂ polymer derived from CO₂).

"Bio-renewable content" is the proportion of readily renewable materials from biological sources compared with the mass of all reactants. Materials having bio-renewable content in the examples: ethyl levulinate glycerol ketal, polyethylene glycol 200, oleic acid, ricinoleic acid.

"Green content" is the sum of the recycle and bio-renewable contents.

Petro-based materials used in the examples: phthalic anhydride, dimethyl terephthalate.

Hydroxyl numbers and acid numbers are determined by standard methods (ASTM E-222 and ASTM D3339, respectively).

Viscosities are measured at 25°C using a Brookfield DV-III Ultra rheometer with spindle #31 at 25%, 50%, and 75% torque.

Color, clarity, and degree of settling are evaluated visually.

| Table 1. LGK-Modified rPET Polyol Formulations | | | | | | |
|---|---|---|---|---|---|---|
| | | | | | | |

| | Amount, g (wt.%) | | | | | |
|---|---|---|---|---|---|---|
| Example | 1 | 2 | 3 | 4 | 5 | 6 |
| | | | | | | |
| recycled PET | 60 (30) | 60 (30) | 60 (30) | 60 (30) | 60 (30) | 0 |
| dimethyl terephthalate (DMT) | 0 | 0 | 0 | 0 | 0 | 43 (21) |
| | | | | | | |
| propylene glycol (PG) | 40 (20) | 48 (24) | 40 (20) | 40 (20) | 40 (20) | 0 |
| diethylene glycol (DEG) | 0 | 0 | 0 | 0 | 0 | 85 (41) |
| polyethylene glycol 200 | 34 (17) | 0 | 20 (10) | 0 | 0 | 0 |
| | | | | | | |
| oleic acid | 0 | 0 | 0 | 20 (10) | 0 | 0 |
| ricinoleic acid | 0 | 0 | 20 (10) | 0 | 20 (10) | 0 |
| phthalic anhydride | 6 (3) | 0 | 0 | 0 | 0 | 0 |
| polypropylene carbonate | 0 | 0 | 0 | 0 | 20 (10) | 0 |
| | | | | | | |
| ethyl levulinate glycerol ketal (LGK) | 60 (30) | 92 (46) | 60 (30) | 80 (40) | 60 (30) | 80 (38) |
| | | | | | | |
| wt.% recycle | 50 | 54 | 50 | 50 | 50 | 41 |
| wt.% bio-renewable | 47 | 46 | 50 | 50 | 45 | 38 |
| wt.% recycle + bio-renewable | 97 | 100 | 100 | 100 | 95 | 79 |
| | | | | | | |
| Recycle components: rPET, PG, DEG; | | | | | | |
| Bio-renewable components: PEG-200, oleic acid, ricinoleic acid, LGK | | | | | | |
| Petro components: DMT, phthalic anhydride | | | | | | |

### Results:

As shown in Table 2, polyols having hydroxyl numbers below 800 mg KOH/g (especially below 500 mg KOH/g), viscosities below 10,000 cP (especially below 5,000 cP), and recycle contents greater than 10 wt.% (especially greater than 35%) can be made by reacting glycol-digested recycled PET or dimethyl terephthalate with ethyl levulinate glycerol ketal and optional hydrophobes. In each case, the molar ratio of glycol to rPET is at least 1.5, the molar ratio of ketal ester to rPET recurring units is within the range of 0.5 to 2.0, and the resulting polyol has a hydroxyl number within the range of 25 to 800 mg KOH/g. The polyols are transparent and free of settling or phase separation problems.

### Two-Component Polyurethane Formulations

The polyester polyol (13.8 g, 0.096 eq.), 2-methyl-1,3-propanediol (0.71 g, 0.016 eq.), and ethylene glycol (1.12 g, 0.055 eq.) are combined in a beaker at room temperature. Hexamethylene diisocyanate (8.82 g, 0.105 eq.) and isophorone diisocyanate (4.99 g, 0.045 eq.) are then added. The mixture is diluted to 50 wt.% with 2-butanone and mechanically stirred until a homogeneous mixture results. Di-n-butyltin dilaurate (0.050 wt. %.) is added. After mixing for about 5 minutes (and a 10°C exotherm), a bead of the reacting mixture is applied to one side of each of five aluminum panels (4" x 6"). The beads of solvent-borne polyurethane are drawn down using a #50 R.D. Specialties bar to a wet film thickness of 4.5 mils. The panels dry in a hood at ambient temperature for at least one hour. They are then heated to 110°C for 1.5-2 h to complete the cure. The films are tested as described further below.

### Testing Methods for 2K Polyurethane Coatings:

Dry film thickness is determined using a PosiTector 6000 (Defelsko Corporation) dry film thickness gauge. Konig hardness is measured using ISO 1522 using a TQC pendulum hardness tester (Model SPO500). The following ASTM test methods are used: pencil scratch hardness: ASTM D3363; flexibility: ASTM D522; adhesion: ASTM D3359; stain testing: ASTM D1308; viscosity: ASTM D562; polyurethane solids content: ASTM D1582.

| Table 2. Polyester Polyols from Digested rPET and Ethyl Levulinate Glycerol Ketal: Preparation and Properties | | | | | | | | | | | | |
|---|---|---|---|---|---|---|---|---|---|---|---|---|
| Ex | Glycols | Other comonomer | LGK/rPET (molar) | Glycols/rPET (molar) | Acid deriv/rPET (molar) | Funct. | Recycle % + Bio-renew. % | OH#(mg KOH/g) | Color | Transp? | Settles? | Vise., cP 25°C |
| 1 | PG, PEG 200 | phthalic anhydride | 0.88 | 2.2 | 0.13 | 2.0 | 97 | 374 | light gold | yes | no | 2516 |
| 2 | PG | none | 1.35 | 2.0 | 0 | 2.0 | 100 | 355 | light grey | yes | no | 9467 |
| 3 | PG, PEG 200 | ricinoleic acid | 0.88 | 2.0 | 0.21 | 2.0 | 100 | 353 | light gold | yes | no | 2727 |
| 4 | PG | oleic acid | 1.17 | 1.7 | 0.23 | 1.9 | 100 | 328 | light gold | yes | no | 6762 |
| 5 | PG, PC diol | ricinoleic acid | 0.88 | 1.7 | 0.21 | 2.0 | 95 | 328 | light gold | yes | no | 2205 |
| 6* | DEG | dimethyl terephthalate | 0 | 0 | 0 | 2.0 | 79 | 353 | light gold | yes | no | 1600 |
| * Made using 40.8% DEG, 38.5% LGK, and 20.7% dimethyl terephthalate. | | | | | | | | | | | | |

| Table 3. Two-Component (2K) Polyurethane Coatings* from LGK/rPET Polyols | | | | | | | | | | | |
|---|---|---|---|---|---|---|---|---|---|---|---|
| | | | | Stain Testing (and 1-hour recovery results) | | | | | Konig hardness | | |
| Ex | OH # (mg KOH/g) | Pencil hardness | Aluminum adhesion | MUS | SUN | WIN | EtOH | H₂O (24 h) | DFT (ave) | Oscill. (ave) | 1/8" mandrel bend |
| 1 | 374 | H | 5B | 3,3 | 3,3 | 4,4 | 2,2 | 3,3 | 1.23 | 7 | P |
| 2 | 355 | H | 4B | 3,3 | 4,4 | 4,5 | 2,2 | 3,3 | 1.91 | 51 | P |
| 3 | 353 | H | 5B | 3,3 | 4,4 | 4,4 | 2,2 | 3,3 | 1.86 | 20 | P |
| 4 | 328 | <HB | 5B | 3,3 | 5,5 | 5,5 | 3,3 | 5,5 | 1.26 | 46 | P |
| 5 | 328 | <HB | 5B | 3,3 | 5,5 | 5,5 | 3,3 | 5,5 | 1.15 | 59 | P |
| control | - | H | 5B | 4,4 | 4,4 | 5,5 | 2,2 | 5,5 | 1.46 | 80 | F |
| * Screening formulation only; coating performance not optimized. | | | | | | | | | | | |
| MUS = mustard, SUN = sunscreen, WIN = Windex® cleaner. DFT = dry film thickness (mils). | | | | | | | | | | | |

### Results:

The screening test results in Table 3 (not optimized) indicate that the levulinate glycerol ketal/rPET polyols are suitable for making hard, flexible coatings as well as flexible coatings.

### Solvent-Free Adhesives

Solvent-free adhesives are produced from a levulinate glycerol ketal/rPET polyol and hexamethylene diisocyanate trimer ("HDI trimer"). The adhesives are tested for their adhesion to PVC, polycarbonate, polyethylene, and aluminum as shown below.

A levulinate glycerol ketal/rPET polyol is produced as described earlier. It comprises 30 wt.% recycled polyethylene terephthalate, 20 wt.% propylene glycol, 17 wt.% polyethylene glycol 200, 30 wt.% of ethyl levulinate glycerol ketal, 3.0 wt.% phthalic anhydride, and 0.1 wt.% of titanium(IV) butoxide.

### Adhesive Preparation:

A plastic container is charged with the levulinate glycerol ketal polyol described above (18 g, 51 wt.%), spacer-grade glass spheres (GL0191B6/250, 0.35 g, 1.0 wt.%, product of Mo-Sci Corp.), and HDI trimer (Vestanat® HT 2500/100, 16.7 g, 47.6 wt.%, product of Evonik). The mixture is hand mixed with a wooden popsicle stick until the material is homogeneous (about 1 minute). Dibutyltin dilaurate (0.035 g, 0.01 wt.%) is then added, and the mixture is vigorously mixed for 30 seconds.

The solvent-free adhesive is applied using a popsicle stick to one side of the substrate (polyvinyl chloride, polycarbonate, polyethylene, or aluminum). The other side of the substrate is pressed onto the 1"x1" adhesive shear testing area. The testing area is held together by placing two binder clips on each side of the substrate. The substrate is then placed into the oven set at 25°C, 50% relative humidity to cure for 3 days. Adhesion testing is completed according to a standard lap shear strength test (ASTM D1002-10). In the test, vertically suspended test specimens are pulled apart using an MTS tensile tester at 12 in/min using a 30 kN load cell and an extension endpoint of 6 in. Break point stress is recorded (psi) as well as the failure mode. Each solvent-free adhesive test is performed in triplicate and average results are reported in Table 4.

Failure modes: "Adhesive failure" (AF) indicates an adhesive bond that ruptures leaving most or all of the adhesive on one of the substrate surfaces. "Cohesive failure" (CF) indicates a rupture of the adhesive wherein adhesive remains bonded to both substrate halves. This is considered good adhesion compared with an AF result, but the mechanical performance of the adhesive itself has room for improvement. "Substrate failure" (SF) refers to samples in which the bond between substrate halves remains intact throughout the test, and the pulled sample reaches full extension with or without breaking. None of the solvent-free, room temperature-cured samples achieves substrate failure.

| Table 4. Solvent-Free Adhesives from LGK/rPET Polyols (3-day results) | | | | | | | | |
|---|---|---|---|---|---|---|---|---|
| | | | | | | | | |

| | Polyvinyl chloride | | Polycarbonate | | Polyethylene | | Aluminum | |
|---|---|---|---|---|---|---|---|---|
| NCO/OH index | ave. peak stress (psi) | fail mode | ave. peak stress (psi) | fail mode | ave. peak stress (psi) | fail mode | ave. peak stress (psi) | fail mode |
| | | | | | | | | |
| 1.05 | 60 | N/A | 94 | N/A | 61 | AF | 132 | AF, CF |
| | | | | | | | | |
| 1.15 | 273 | AF, CF | 273 | AF, CF | 55 | AF | 225 | AF |
| Ave. peak stress (in pounds per square inch) is an average of three test samples. | | | | | | | | |
| AF: adhesive failure; CF: cohesive failure; N/A: not attempted | | | | | | | | |

As shown in Table 4, better adhesive properties can be achieved at the higher NCO/OH index. With polyethylene, the average peak stress values are lower, but this is expected with the non-polar polymer substrate. Overall, the results indicate that solvent-free, room temperature-cured adhesives with acceptable properties can be formulated using polyols made from recycled PET and levulinate glycerol ketals.

### Flexible Polyurethane Foam

A water-blown polyurethane foam is prepared as follows from a mixture of polyols that includes an inventive levulinate glycerol ketal/rPET polyol.

A polyol mixture is prepared from 90 wt.% of Voranol® 3322 (a polyether triol comprising 88% PO and 12% EO units, all secondary hydroxyl groups, hydroxyl value = 48 mg KOH/g, product of Dow Chemical) and 10 wt.% of an inventive polyester diol (made from 30 wt.% recycled polyethylene terephthalate, 20 wt.% propylene glycol, 17 wt.% polyethylene glycol 200, 30 wt.% of ethyl levulinate glycerol ketal, 3.0 wt.% phthalic anhydride, and 0.1 wt.% of titanium(IV) butoxide; hydroxyl value: 394 mg KOH/g).

The "B" side of the foam includes the polyol mixture (100 pbw), water (4 pbw), dimethylethanolamine (0.2 parts per 100 parts polyol), tin(II) 2-ethylhexanoate (0.2 parts per 100 parts polyol), and Tegostab® BF 2370 surfactant (product of Evonik Degussa, 1.5 parts per 100 parts polyol). The "B" side components are transferred to a 500-mL stainless-steel mixing cup and mixed by 2" Cowles-style blade until homogeneous.

The "A" side, comprised of TDI 80 (an 80/20 ratio of the 2,4- and 2,6- isomers of toluene diisocyanate), is quickly added at an index of 105. Immediately after addition, the mixing cup is placed on a VOS power control mixer (VWR International) equipped with the same Cowles blade and mixed at 2000 rpm for ten seconds. The mixing time is controlled by an electronic timer with foot pedal attachment (GraLab Model 451). The well-mixed foam is poured into a paper bucket and allowed to rise.

The resulting foam has increased resistance to indentation. It rises about 15% less and is somewhat stiffer compared with a control foam produced using Voranol® 3322 as the only polyol.

A third foam is produced by the same method using 75 wt.% Voranol® 3322 and 25 wt.% of the levulinate glycerol ketal/rPET polyol. This foam displays a reduced rise profile compared with the control and produces a stiffer foam than the other two with similar good resistance to indentation. After fully curing, the foam shrinks to about one half of its original volume. However, inclusion of a cell-opener or use of a different surfactant might allow for the production of an acceptable foam from this polyol blend.

The preceding examples are meant only as illustrations; the following claims define the inventive subject matter.

## Claims

1. A polyester polyol comprising recurring units from:
(a) a digested thermoplastic polyester;
(b) a glycol; and
(c) a hydroxy-functional ketal acid, ester or amide;
wherein the molar ratio of glycol to thermoplastic polyester recurring units is at least 1.5, the molar ratio of ketal acid, ester or amide to thermoplastic polyester recurring units is within the range of 0.5 to 2.0, and the polyol has a hydroxyl number within the range of 25 to 800 mg KOH/g.

2. The polyol of claim 1 wherein the thermoplastic polyester is selected from the group consisting of polyethylene terephthalate; polybutylene terephthalate; polytrimethylene terephthalate; glycol-modified polyethylene terephthalate; copolymers of terephthalic acid and 1,4-cyclohexanedimethanol; isophthalic acid-modified copolymers of terephthalic acid and 1,4-cyclohexanedimethanol; copolymers of 2,2,4,4-tetramethyl-1,3-cyclobutanediol with isophthalic acid, terephthalic acid or orthophthalic derivatives; polyhydroxyalkanoates; polyethylene furanoate; dihydroferulic acid polymers; and mixtures thereof.

3. The polyol of claim 1 or claim 2 wherein the glycol is selected from the group consisting of ethylene glycol, propylene glycol, 1,3-propanediol, 1,2-butylene glycol, 1,3-butylene glycol, 1,4-butanediol, 2,2,4,4-tetramethyl-1,3-cyclobutanediol, 2-methyl-1,3-propanediol, 1,6-hexanediol, pentaerythritol, sorbitol, neopentyl glycol, glycerol, trimethylolpropane, 3-methyl-1,5-pentanediol, 1,4-cyclohexanedimethanol, 1,3-cyclohexanedimethanol, bisphenol A ethoxylates, diethylene glycol, tetraethylene glycol, dipropylene glycol, triethylene glycol, tripropylene glycol, polyethylene glycols having a number average molecular weight up to about 400 g/mol, block or random copolymers of ethylene oxide and propylene oxide, and mixtures thereof.

4. The polyol of any of claims 1 to 3 wherein the hydroxy-functional ketal acid, ester or amide has the general structure: 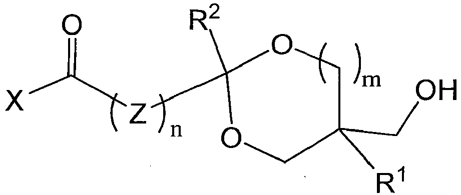 wherein R¹ is hydrogen, methyl, ethyl, or hydroxymethyl; R² is hydrogen, C₁-C₂₄ alkyl, or C₁-C₂₄ alkenyl; Z is a C₁-C₆ alkylene group or a C₁-C₆ alkylene group substituted with a C₁-C₂₄ alkyl or alkenyl group; X is OR³ or NR⁴R⁵; R³ is hydrogen or a C₁-C₁₂ alkyl group; each of R⁴ and R⁵ is independently a C₁-C₁₂ alkyl group; m is 0 or 1; and n is 0 or 1.

5. The polyol of any of claims 1 to 4 wherein the hydroxy-functional ketal acid, ester or amide is a levulinate glycerol ketal.

6. The polyol of any of claims 1 to 5 further comprising recurring units of a hydrophobe in an amount within the range of 0.1 to 1.0 moles, preferably 0.15 to 0.8 moles of hydrophobe per mole of thermoplastic polyester, wherein the hydrophobe is preferably selected from the group consisting of dimer fatty acids, oleic acid, ricinoleic acid, tung oil, corn oil, canola oil, soybean oil, sunflower oil, triglycerides or alkyl carboxylate esters having saturated or unsaturated C₆-C₃₆ fatty acid units, castor oil, alkoxylated castor oil, saturated or unsaturated C₆-C₁₈ dicarboxylic acids or diols, cardanol-based products, recycled cooking oil, branched or linear C₆-C₃₆ fatty alcohols, hydroxy-functional materials derived from epoxidized, ozonized, or hydroformylated fatty esters or fatty acids, and mixtures thereof.

7. The polyol of any of claims 1 to 6 having an average hydroxyl functionality within the range of 1.8 to 2.7.

8. A polyurethane flexible foam, rigid foam, coating, sealant, adhesive, or elastomer prepared from the polyol of any of claims 1 to 7.

9. A curable resin comprising a reaction product of an acrylate or methacrylate source and the polyol of any of claims 1 to 7.

10. A UV-cured coating made from the resin of claim 9.

11. A process for making a polyester polyol of any of claims 1 to 7, comprising:
(a) heating a thermoplastic polyester with a glycol to give a digested intermediate; and
(b) reacting the intermediate with a hydroxy-functional ketal acid, ester or amide to give the polyol;
wherein the molar ratio of glycol to thermoplastic polyester recurring units is at least 1.5, the molar ratio of ketal acid, ester or amide to thermoplastic polyester recurring units is within the range of 0.5 to 2.0, and the polyol has a hydroxyl number within the range of 25 to 800 mg KOH/g.

12. The process of claim 11 wherein the thermoplastic polyester and glycol are heated in the presence of a titanium or tin catalyst.

13. The process of any of claims 11 or 12 wherein the glycol is selected from the group consisting of ethylene glycol, propylene glycol, 1,3-propanediol, 1,2-butylene glycol, 1,3-butylene glycol, 1,4-butanediol, 2-methyl-1,3-propanediol, 1,6-hexanediol, pentaerythritol, sorbitol, neopentyl glycol, glycerol, trimethylolpropane, 2,2,4,4-tetramethyl-1,3-cyclobutanediol, 3-methyl-1,5-pentanediol, 1,4-cyclohexanedimethanol, 1,3-cyclohexanedimethanol, bisphenol A ethoxylates, diethylene glycol, tetraethylene glycol, dipropylene glycol, triethylene glycol, tripropylene glycol, polyethylene glycols having a number average molecular weight up to about 400 g/mol, block or random copolymers of ethylene oxide and propylene oxide, and mixtures thereof.

14. The process of any of claims 11 to 13 wherein the hydroxy-functional ketal acid, ester or amide has the general structure: 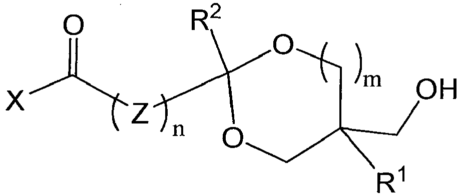 wherein R¹ is hydrogen, methyl, ethyl, or hydroxymethyl; R² is hydrogen, C₁-C₂₄ alkyl, or C₁-C₂₄ alkenyl; Z is a C₁-C₆ alkylene group or a C₁-C₆ alkylene group substituted with a C₁-C₂₄ alkyl or alkenyl group; X is OR³ or NR⁴R⁵; R³ is hydrogen or a C₁-C₁₂ alkyl group; each of R⁴ and R⁵ is independently a C₁-C₁₂ alkyl group; m is 0 or 1; and n is 0 or 1.

15. The process of any of claims 11 to 14 further comprising reacting the digested intermediate with a hydrophobe, wherein the hydrophobe is selected from the group consisting of dimer fatty acids, oleic acid, ricinoleic acid, tung oil, corn oil, canola oil, soybean oil, sunflower oil, triglycerides or alkyl carboxylate esters having saturated or unsaturated C₆-C₃₆ fatty acid units, castor oil, alkoxylated castor oil, saturated or unsaturated C₆-C₁₈ dicarboxylic acids or diols, cardanol-based products, recycled cooking oil, branched or linear C₆-C₃₆ fatty alcohols, hydroxy-functional materials derived from epoxidized, ozonized, or hydroformylated fatty esters or fatty acids, and mixtures thereof.

## Patentansprüche

1. Polyesterpolyol mit sich wiederholenden Einheiten aus:
a) einem aufgeschlossenen thermoplastischen Polyester;
b) einem Glycol; und
c) einer hydroxyfunktionellen Ketalsäure, einem Ester oder einem Amid;
wobei das Molverhältnis der sich wiederholenden Einheiten von Glycol zu thermoplastischem Polyester mindestens 1,5 beträgt, das Molverhältnis der sich wiederholenden Einheiten von Ketalsäure, Ester oder Amid zu thermoplastischem Polyester im Bereich von 0,5 bis 2,0 liegt und das Polyol eine Hydroxylzahl im Bereich von 25 bis 800 mg KOH/g hat.

2. Polyol nach Anspruch 1, wobei der thermoplastische Polyester aus der aus Polyethylenterephthalat, Polybutylenterephthalat, Polytrimethylenterephthalat, glycolmodifiziertem Polyethylenterephthalat, Copolymeren von Terephthalsäure und 1,4-Cyclohexandimethanol, isophthalsäuremodifizierten Copolymeren aus Terephthalsäure und 1,4-Cyclohexandimethanol, Copolymeren aus 2,2,4,4-Tetramethyl-1,3-cyclobutandiol mit Isophthalsäure, Terephthalsäure oder Orthophthalderivaten; Polyhydroxyalkanoaten, Polyethylenfuranoat, Dihydroferulasäurepolymeren und Mischungen davon bestehenden Gruppe ausgewählt ist.

3. Polyol nach Anspruch 1 oder Anspruch 2, wobei das Glycol aus der aus Ethylenglycol, Propylenglycol, 1,3-Propandiol, 1,2-Butylenglycol, 1,3-Butylenglycol, 1,4-Butandiol, 2,2,4,4-Tetramethyl-1,3-cyclobutandiol, 2-Methyl-1,3-propandiol, 1,6-Hexandiol, Pentaerythrit, Sorbit, Neopentylglycol, Glycerin, Trimethylolpropan, 3-Methyl-1,5-pentandiol, 1,4-Cyclohexandimethanol, 1,3-Cyclohexandimethanol, Bisphenol A-Ethoxylaten, Diethylenglycol, Tetraethylenglycol, Dipropylenglycol, Triethylenglycol, Tripropylenglycol, Polyethylenglycolen mit einem zahlenmittleren Molekulargewicht bis etwa 400 g/mol, Block- oder statistischen Copolymeren von Ethylenoxid und Propylenoxid und Mischungen davon bestehenden Gruppe ausgewählt ist.

4. Polyol nach einem der Ansprüche 1 bis 3, wobei die hydroxyfunktionelle Ketalsäure, der Ester oder das Amid die folgende allgemeine Struktur aufweist: 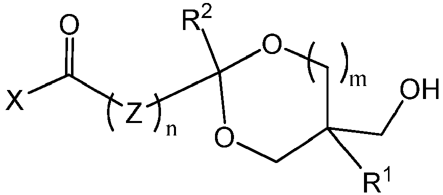 wobei R¹ Wasserstoff, Methyl, Ethyl oder Hydroxymethyl ist; R² Wasserstoff, C₁-C₂₄-Alkyl oder C₁-C₂₄-Alkenyl ist; Z eine C₁-C₆-Alkylengruppe oder eine mit einer C₁-C₂₄-Alkyl- oder Alkenylgruppe substituierte C₁-C₆-Alkylengruppe ist; X OR³ oder NR⁴R⁵ ist; R³ Wasserstoff oder eine C₁-C₁₂-Alkylgruppe ist; R⁴ und R⁵ jeweils unabhängig voneinander eine C₁-C₁₂-Alkylgruppe sind; m 0 oder 1 ist; und n 0 oder 1 ist.

5. Polyol nach einem der Ansprüche 1 bis 4, wobei die hydroxyfunktionelle Ketalsäure, der Ester oder das Amid ein Lävulinat-Glycerin-Ketal ist.

6. Polyol nach einem der Ansprüche 1 bis 5, ferner mit sich wiederholenden Einheiten eines hydrophoben Stoffes in einer Menge im Bereich von 0,1 bis 1,0 Mol, vorzugsweise 0,15 bis 0,8 Mol des hydrophoben Stoffes pro Mol des thermoplastischen Polyesters, wobei der hydrophobe Stoff vorzugsweise aus der aus Dimerfettsäuren, Ölsäure, Ricinolsäure, Tungöl, Maisöl, Rapsöl, Sojaöl, Sonnenblumenöl, Triglyceriden oder Alkylcarboxylatestern mit gesättigten oder ungesättigten C₆-C₃₆-Fettsäureeinheiten, Castoröl, alkoxyliertem Castoröl, gesättigten oder ungesättigten C₆-C₁₈-Dicarbonsäuren oder -diolen, Produkten auf Cardanolbasis, wiederaufbereitetem Speiseöl, verzweigten oder linearen C₆-C₃₆-Fettalkoholen, hydroxyfunktionellen Materialien, die von epoxidierten, ozonisierten oder hydroformylierten Fettsäureestern oder Fettsäuren abgeleitet sind, und Mischungen davon bestehenden Gruppe ausgewählt ist.

7. Polyol nach einem der Ansprüche 1 bis 6 mit einer durchschnittlichen Hydroxylfunktionalität im Bereich von 1,8 bis 2,7.

8. Polyurethanweichschaum, -hartschaum, -beschichtung, -dichtungsmittel, -klebstoff oder -elastomer, die aus dem Polyol nach einem der Ansprüche 1 bis 7 hergestellt sind.

9. Härtbares Harz mit einem Reaktionsprodukt aus einer Acrylat- oder Methacrylatquelle und dem Polyol nach einem der Ansprüche 1 bis 7.

10. UV-gehärtete Beschichtung aus dem Harz nach Anspruch 9.

11. Verfahren zur Herstellung eines Polyesterpolyols nach einem der Ansprüche 1 bis 7, das Folgendes umfasst:
a) Erwärmen eines thermoplastischen Polyesters mit einem Glycol unter Erhalt eines aufgeschlossenen Zwischenprodukts, und
b) Umsetzen des Zwischenprodukts mit einer hydroxyfunktionellen Ketalsäure, einem Ester oder einem Amid unter Erhalt des Polyols,
wobei das Molverhältnis der sich wiederholenden Einheiten von Glycol zu thermoplastischem Polyester mindestens 1,5 beträgt, das Molverhältnis der sich wiederholenden Einheiten von Ketalsäure, Ester oder Amid zu thermoplastischem Polyester im Bereich von 0,5 bis 2,0 liegt und das Polyol eine Hydroxylzahl im Bereich von 25 bis 800 mg KOH/g hat.

12. Verfahren nach Anspruch 11, wobei der thermoplastische Polyester und das Glycol in Gegenwart eines Titan- oder Zinnkatalysators erwärmt werden.

13. Verfahren nach einem der Ansprüche 11 oder 12, wobei das Glycol aus der aus Ethylenglycol, Propylenglycol, 1,3-Propandiol, 1,2-Butylenglycol, 1,3-Butylenglycol, 1,4-Butandiol, 2-Methyl-1,3-propandiol, 1,6-Hexandiol, Pentaerythrit, Sorbit, Neopentylglycol, Glycerin, Trimethylolpropan, 2,2,4,4-Tetramethyl-1,3-cyclobutandiol, 3-Methyl-1,5-pentandiol, 1,4-Cyclohexandimethanol, 1,3-Cyclohexandimethanol, Bisphenol A-Ethoxylaten, Diethylenglycol, Tetraethylenglycol, Dipropylenglycol, Triethylenglycol, Tripropylenglycol, Polyethylenglycolen mit einem zahlenmittleren Molekulargewicht bis etwa 400 g/mol, Block- oder statistischen Copolymeren von Ethylenoxid und Propylenoxid und Mischungen davon bestehenden Gruppe ausgewählt ist.

14. Verfahren nach einem der Ansprüche 11 bis 13, wobei die hydroxyfunktionelle Ketalsäure, der Ester oder das Amid die folgende allgemeine Struktur aufweist: 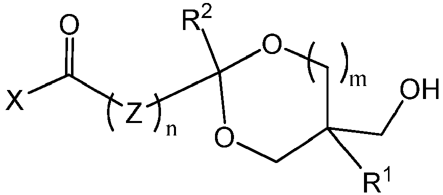 wobei R¹ Wasserstoff, Methyl, Ethyl oder Hydroxymethyl ist; R² Wasserstoff, C₁-C₂₄-Alkyl oder C₁-C₂₄-Alkenyl ist; Z eine C₁-C₆-Alkylengruppe oder eine mit einer C₁-C₂₄-Alkyl- oder Alkenylgruppe substituierte C₁-C₆-Alkylengruppe ist; X OR³ oder NR⁴R⁵ ist; R³ Wasserstoff oder eine C₁-C₁₂-Alkylgruppe ist; R⁴ und R⁵ jeweils unabhängig voneinander eine C₁-C₁₂-Alkylgruppe sind; m 0 oder 1 ist; und n 0 oder 1 ist.

15. Verfahren nach einem der Ansprüche 11 bis 14, bei dem ferner das aufgeschlossene Zwischenprodukt mit einem hydrophoben Stoff umgesetzt wird, wobei der hydrophobe Stoff aus der aus Dimerfettsäuren, Ölsäure, Ricinolsäure, Tungöl, Maisöl, Rapsöl, Sojaöl, Sonnenblumenöl, Triglyceriden oder Alkylcarboxylatestern mit gesättigten oder ungesättigten C₆-C₃₆-Fettsäureeinheiten, Castoröl, alkoxyliertem Castoröl, gesättigten oder ungesättigten C₆-C₁₈-Dicarbonsäuren oder -diolen, Produkten auf Cardanolbasis, wiederaufbereitetem Speiseöl, verzweigten oder linearen C₆-C₃₆-Fettalkoholen, hydroxyfunktionellen Materialien, die von epoxidierten, ozonisierten oder hydroformylierten Fettsäureestern oder Fettsäuren abgeleitet sind, und Mischungen davon bestehenden Gruppe ausgewählt wird.

## Revendications

1. Polyol de polyester comprenant des unités récurrentes :
(a) d'un polyester thermoplastique désagrégé ;
(b) d'un glycol ; et
(c) d'un acide de cétal hydroxy-fonctionnel, d'un ester ou d'un amide ;
le rapport molaire des unités récurrentes du glycol au polyester thermoplastique étant d'au moins 1,5, le rapport molaire des unités récurrentes d'acide de cétal, d'ester ou d'amide au polyester thermoplastique étant dans une plage de 0,5 à 2,0, et le polyol présentant un indice d'hydroxyle dans une plage de 25 à 800 mg KOH/g.

2. Polyol selon la revendication 1, le polyester thermoplastique étant choisi dans le groupe constitué de polytéréphtalate d'éthylène ; de polytéréphtalate de butylène ; de polytéréphtalate de triméthylène ; de polytéréphtalate d'éthylène modifié par du glycol ; de copolymères d'acide téréphtalique et de 1,4-cyclohexane-diméthanol ; de copolymères modifiés en acide isophtalique d'acide téréphtalique et de 1,4-cyclohexane-diméthanol ; de copolymères de 2,2,4,4-tétraméthyle-1,3-cyclobutanediole avec de l'acide isophtalique, de l'acide téréphtalique ou des dérivés orthophtaliques ; de polyhydroxyalcanoates ; de polyéthylène-furanoate ; de polymères d'acide dihydroférulique ; et de mélanges de ceux-ci.

3. Polyol selon la revendication 1 ou 2, le glycol étant choisi dans le groupe constitué d'éthylène glycol, de propylène glycol, de propane-1,3-diol, de 1,2-butylène glycol, de 1,3-butylène glycol, de butane-1,4-diol, de 2,2,4,4-tétraméthyle-1,3-cyclobutanediole, de 2-méthylpropane-1,3-diol, d'hexane-1,6-diol, de pentaérythritol, de sorbitol, de néopentyle glycol, de glycérol, de triméthylolpropane, de 3-méthylpentane-1,5-diol, de 1,4-cyclohexanediméthanol, de 1,3-cyclohexanediméthanol, de bisphénols A éthoxylés, de diéthylène glycol, de tetraéthylène glycol, de dipropylène glycol, de triéthylène glycol, de tripropylène glycol, de polyéthylène glycols présentant un masse molaire moyenne en nombre s'élevant jusqu'à environ 400 g/mol, de copolymères en bloc ou aléatoires d'oxyde d'éthylène et d'oxyde de propylène, et de mélanges de ceux-ci.

4. Polyol selon l'une des revendications 1 à 3, l'acide de cétal hydroxy-fonctionnel, l'ester ou l'amide présentant la structure générale suivante : 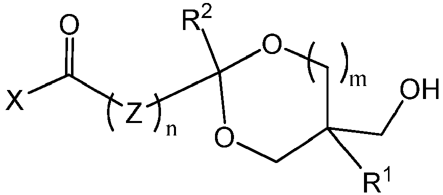 R¹ étant de l'hydrogène, du méthyle, de l'éthyle ou du hydroxy-méthyle ; R² étant de l'hydrogène, de l'alkyle en C₁-C₂₄ ou de l'alcényle en C₁-C₂₄ ; Z étant un groupe alkylène en C₁-C₆ ou un groupe alkylène en C₁-C₆ substitué par un groupe alkyle ou alcényle en C₁-C₂₄ ; X étant du OR³ ou du ; R³ étant de l'hydrogène ou un groupe alkyle en C₁-C₁₂ ; R⁴ et R⁵ étant chacun indépendamment un groupe alkyle en C₁-C₁₂ ; m étant 0 ou 1 ; et n étant 0 ou 1.

5. Polyol selon l'une des revendications 1 à 4, l'acide de cétal hydroxy-fonctionnel, l'ester ou l'amide étant un cétal de lévulinate-glycérol.

6. Polyol selon l'une des revendications 1 à 5, comprenant en outre des unités récurrentes d'une matière hydrophobe dans une quantité dans une plage de 0,1 à 1,0 mol, de préférence de 0,15 à 0,8 mol de matière hydrophobe par mol de polyester thermoplastique, la matière hydrophobe étant de préférence choisie dans le groupe constitué d'acides gras dimères, d'acide oléique, d'acide ricinoléique, d'huile de tung, d'huile de maïs, d'huile de colza, d'huile de soja, d'huile de tournesol, de triglycérides ou d'esters de carboxylate d'alkyle présentant des unités d'acide gras en C₆-C₃₆ saturées ou insaturées, d'huile de ricin, d'huile de ricin alcoxylée, d'acides dicarboxyliques en C₆-C₁₈ ou de diols saturés ou insaturés, de produits à base de cardanole, d'huile alimentaire recyclée, d'alcools gras ramifiés ou linéaires en C₆-C₃₆, de matériaux hydroxy-fonctionnels dérivés d'esters gras ou d'acides gras époxydés, ozonisés ou hydroformylés, et de mélanges de ceux-ci.

7. Polyol selon l'une des revendications 1 à 6, présentant une fonctionnalité hydroxyle moyenne dans une plage de 1,8 à 2,7.

8. Mousse souple, mousse rigide, revêtement, matériau d'étanchéité, adhésif ou élastomère de polyuréthane, fabriqué(e) à partir du polyol selon l'une des revendications 1 à 7.

9. Résine durcissable présentant un produit de réaction d'une source d'acrylate ou de méthacrylate et du polyol selon l'une des revendications 1 à 7.

10. Revêtement durci aux UV, réalisé à partir de la résine selon la revendication 9.

11. Procédé de fabrication d'un polyol de polyester selon l'une des revendications 1 à 7, comprenant :
(a) chauffer un polyester thermoplastique avec un glycol pour obtenir un produit intermédiaire désagrégé ; et
(b) faire réagir le produit intermédiaire avec un acide de cétal hydroxy-fonctionnel, un ester ou un amide afin d'obtenir le polyol ;
le rapport molaire des unités récurrentes du glycol au polyester thermoplastique étant d'au moins 1,5, le rapport molaire des unités récurrentes d'acide de cétal, d'ester ou d'amide au polyester thermoplastique étant dans une plage de 0,5 à 2,0, et le polyol présentant un indice d'hydroxyle dans une plage de 25 à 800 mg KOH/g.

12. Procédé selon la revendication 11, le polyester thermoplastique et le glycol étant chauffés sous présence d'un catalyseur au titane ou à l'étain.

13. Procédé selon l'une des revendications 11 ou 12, le glycol étant choisi dans le groupe constitué d'éthylène glycol, de propylène glycol, de propane-1,3-diol, de 1,2-butylène glycol, de 1,3-butylène glycol, de butane-1,4-diol, de 2-méthylpropane-1,3-diol, d'hexane-1,6-diol, de pentaérythritol, de sorbitol, de néopentyle glycol, de glycérol, de triméthylolpropane, de 2,2,4,4-tétraméthyle-1,3-cyclobutanediole, de 3-méthylpentane-1,5-diol, de 1,4-cyclohexanediméthanol, de 1,3-cyclohexanediméthanol, de bisphénols A éthoxylés, de diéthylène glycol, de tetraéthylène glycol, de dipropylène glycol, de triéthylène glycol, de tripropylène glycol, de polyéthylène glycols présentant un masse molaire moyenne en nombre s'élevant jusqu'à environ 400 g/mol, de copolymères en bloc ou aléatoires d'oxyde d'éthylène et d'oxyde de propylène, et de mélanges de ceux-ci.

14. Procédé selon l'une des revendications 11 à 13, l'acide de cétal hydroxy-fonctionnel, l'ester ou l'amide présentant la structure générale suivante : 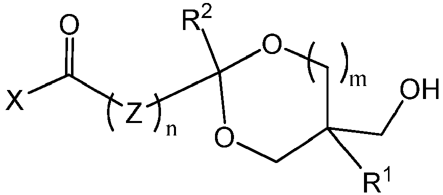 R¹ étant de l'hydrogène, du méthyle, de l'éthyle ou du hydroxy-méthyle ; R² étant de l'hydrogène, de l'alkyle en C₁-C₂₄ ou de l'alcényle en C₁-C₂₄ ; Z étant un groupe alkylène en C₁-C₆ ou un groupe alkylène en C₁-C₆ substitué par un groupe alkyle ou alcényle en C₁-C₂₄ ; X étant du OR³ ou du ; R³ étant de l'hydrogène ou un groupe alkyle en C₁-C₁₂ ; R⁴ et R⁵ étant chacun indépendamment un groupe alkyle en C₁-C₁₂ ; m étant 0 ou 1 ; et n étant 0 ou 1.

15. Procédé selon l'une des revendications 11 à 14, dans lequel le produit intermédiaire désagrégé est en outre amené à réagir avec une matière hydrophobe, la matière hydrophobe étant choisie dans le groupe constitué d'acides gras dimères, d'acide oléique, d'acide ricinoléique, d'huile de tung, d'huile de maïs, d'huile de colza, d'huile de soja, d'huile de tournesol, de triglycérides ou d'esters de carboxylate d'alkyle présentant des unités d'acide gras en C₆-C₃₆ saturées ou insaturées, d'huile de ricin, d'huile de ricin alcoxylée, d'acides dicarboxyliques en C₆-C₁₈ ou de diols saturés ou insaturés, de produits à base de cardanole, d'huile alimentaire recyclée, d'alcools gras ramifiés ou linéaires en C₆-C₃₆, de matériaux hydroxy-fonctionnels dérivés d'esters gras ou d'acides gras époxydés, ozonisés ou hydroformylés, et de mélanges de ceux-ci.
